# EUROPÄISCHE PATENTSCHRIFT

(11) **EP 1 785 042 B1**
(45) Veröffentlichungstag und Bekanntmachung des Hinweises auf die Patenterteilung: **14.01.2009**
(21) Anmeldenummer: 06023323.6
(22) Anmeldetag: 09.11.2006
(51) Int. Cl.: A23L 2/385, B05B 11/00

(54) **Getränkekonzentrat und Fertiggetränk**
Beverage concentrate and beverage
Concentré de boisson et boisson

(30) Priorität: 09.11.2005 DE 102005053845
(43) Veröffentlichungstag der Anmeldung: 16.05.2007
(73) Patentinhaber: Rintisch, Bernhard, 46242 Bottrop (DE); Becker, Johannes, Dr., 46045 Oberhausen (DE)
(72) Erfinder: Rintisch, Bernhard, 46242 Bottrop (DE); Becker, Johannes, Dr, 46045 Oberhausen (DE)
(74) Vertreter: Gesthuysen, von Rohr & Eggert

(56) Entgegenhaltungen:
- EP-A1- 0 419 885
- GB-A- 1 124 335
- US-A- 5 524 791
- US-A- 6 024 991

## Beschreibung

Die Erfindung betrifft ein Getränkekonzentrat nach dem Oberbegriff von Anspruch 1.

Aus der US-A-6 024 991 sind Teekonzentrate und Teefertiggetränke bekannt, die zuckerfrei sind und die 0,5 bis 2,5 Gew.-% Xanthan als Verdickungsmittel enthalten.

Aus der EP-A1-0 419 885 ist eine Trink- und Sondennahrung bekannt, bei der durch Zusatz von Natrium-Alginat und/oder Agar-Agar eine Stabilisierung erreicht und die Abscheidung von Hydrokolloid-Guarkernmehl bei der Lagerung verhindert wird.

Schließlich ist aus der GB-A-1 124 335 ein fruchtfleischhaltiges Getränkekonzentrat bekannt, wobei durch die Zugabe von Stabilisatoren die Bildung eines Bodensatzes verhindert wird.

Sowohl in der Gastronomie, speziell im Sport- und Fitneßbereich, als auch im privaten Haushalt werden hochkonzentrierte Lösungen als pumpfähige Getränkekonzentrate zur Herstellung von Fertiggetränken verwendet. Zur dosierten Entnahme einer Volumeneinheit des Getränkekonzentrates aus einem Vorratsbehälter kommen Getränkedispenser bzw. Hubspendevorrichtungen zum Einsatz, die manuell betätigbar sind. Eine Hubspendevorrichtung der zuvor genannten Art ist beispielsweise aus der US-A-5,524,791 bekannt. Die bekannten Hubspendevorrichtungen weisen eine Pumpeinrichtung mit einer Förderleitung und mit wenigstens einem Fördermittel auf, wobei die Förderleitung im Betriebszustand der Hubspendevorrichtung an den Vorratsbehälter angeschlossen ist.

Die Pumpeinrichtung bekannter Hubspendevorrichtungen ist derart ausgebildet, daß es durch entgegengesetzte Hubbewegungen des Fördermittels zur Ausbildung eines Druckgefälles in dem Fördersystem kommt. Dabei wird zumindest eine Hubbewegung des Fördermittels durch Ausüben einer manuellen Druckkraft oder Zugkraft eines Anwenders auf das Fördermittel bewirkt.

Das ausgebildete Druckgefälle wird genutzt, um bei einem Aufwärtshub oder einem Abwärtshub des Fördermittels jeweils eine festgelegte bzw. dosierte Menge des Getränkekonzentrates über die Förderleitung aus dem Vorratsbehälter in die Umgebung bzw. in einen Behälter zu fördern. Beispielsweise kann durch Hubbewegungen ein Unterdruck in der Förderleitung erzeugt werden, so daß das Getränkekonzentrat nach oben angesaugt wird. Ebensogut ist es möglich, daß durch Hubbewegungen ein Überdruck in dem Vorratsbehälter erzeugt wird, der zu einer Verdrängung des Getränkekonzentrates aus dem Vorratsbehälter führt. Bei der letztgenannten Ausführungsform stellen die Pumpeinrichtung und der Vorratsbehälter der Hubspendevorrichtung Bestandteile eines Fördersystems dar.

Vorzugsweise ist eine mit der Förderleitung verbundene Dosierkammer der Pumpeinrichtung für das Getränkekonzentrat vorgesehen, die bei einer Hubbewegung des Fördermittels infolge des Druckgefälles über die Förderleitung mit dem Getränkekonzentrat befüllt und bei einer entgegengesetzt gerichteten Hubbewegung in die Umgebung entleert wird. Nach dem Austritt aus einer Austrittsöffnung der Hubspendevorrichtung wird die Fördermenge des Getränkekonzentrates mit einer Mischflüssigkeit, vorzugsweise mit Wasser, zur Fertigstellung des Fertiggetränkes vermischt.

Für eine gleichbleibende Befüllung der Dosierkammer in einer Hubbewegung ist es erforderlich, daß die Flüssigkeitssäule in der Förderleitung eine festgelegte Steighöhe erreicht hat. Ist die Steighöhe noch nicht erreicht, kann bei einem Befüllvorgang die Dosierkammer nur zu einem geringen Teil oder noch gar nicht befüllt werden. Wird eine Hubspendevorrichtung der bekannten Art zum ersten Mal benutzt, ist es daher zur Herstellung eines Fertiggetränkes mit einer gewünschten Geschmacksintensität erforderlich, den Pumpvorgang mehrmals auszuführen, um das Getränkekonzentrat in der Förderleitung bis auf die notwendige Steighöhe zu fördern und um eine gleichbleibende Befiillung bei jedem Pumpvorgang sicherzustellen.

Vor allem preisgünstige Hubspendevorrichtungen weisen den Nachteil auf, daß das Fördersystem in der Regel nicht luftdicht abgeschlossen ist. Dies führt über einen längeren Zeitraum, in dem die Pumpeinrichtung nicht betätigt wird, zu einem Druckausgleich der sich infolge der Hubbewegung in dem Fördersystem ausgebildeten Druckunterschiede. Aufgrund des Druckausgleiches kommt es zu einem Absinken der Steighöhe des Getränkekonzentrates in der Förderleitung. Je geringer die Viskosität des Getränkekonzentrates ist, desto schneller sinkt der Flüssigkeitsspiegel in der Förderleitung ab. Wird nach dem Absinken der Steighöhe des Getränkekonzentrates in der Förderleitung die Pumpeinrichtung erneut betätigt, kann zumindest bei dem ersten Pumpvorgang nicht die geforderte Menge des Getränkekonzentrates aus dem Vorratsbehälter gefördert werden. Bei langer Standzeit kann der Flüssigkeitsspiegel in der Förderleitung sogar bis auf das Flüssigkeitsniveau des Getränkekonzentrates im Vorratsbehälter absinken, so daß die Pumpeinrichtung mehrmals betätigt werden muß, um eine gewünschte Volumeneinheit des Getränkekonzentrates aus dem Behälter zu entnehmen. Das mehrmalige Betätigen der Pumpeinrichtung führt zu Konzentratverlusten. Zu dem ist eine genaue Dosierung des Getränkekonzentrates nach jedem Absinken des Flüssigkeitsspiegels in der Förderleitung nur bedingt möglich, was zu unerwünschten unter- bzw. überdosierten Fertiggetränken führen kann.

Zwar sind auch Hubspendevorrichtungen bekannt, deren Fördersystem luftdicht abgeschlossen ist. Diese Hubspendevorrichtungen sind jedoch teuer und werden daher nicht zur Herstellung von Fertiggetränken, wie Sportler- und Fitnessdrinks, eingesetzt.

Um das Absinken des Getränkekonzentrates in der Förderleitung zu verringern und die Pumpfähigkeit des Getränkekonzentrates sicherstellen zu können, wird die Viskosität bekannter Getränkekonzentrate durch die Zugabe von Zucker erhöht. Dabei ist von Vorteil, daß sich auch stark zuckerhaltige Getränkekonzentrate leicht und vollständig in Wasser auflösen lassen. Nach dem Fördern einer gewünschten Menge des Getränkekonzentrates, bspw. in ein Glas oder dgl., sind bereits die beim Auffüllen des Glases mit Wasser entstehenden Turbulenzen während der Herstellung des Fertiggetränkes ausreichend groß, um ein Fertiggetränk ohne weiteres Umrühren zur Verfügung zu stellen, bei dem das Getränkekonzentrat im wesentlichen vollständig in dem Wasser gelöst ist. Aus dem Stand der Technik bekannte Getränkekonzentrate weisen in der Regel eine Dichte von größer als 1,3 kg/l auf, wobei zur Einstellung der gewünschten Viskosität dem Getränkekonzentrat bis zu 700 g/l Zucker hinzugegeben werden müssen.

Gleichwohl kann auch bei stark zuckerhaltigen Getränkekonzentraten das Absinken des Getränkekonzentrates in der Förderleitung über einen längeren Zeitraum nicht verhindert werden. Um jeweils ein annähernd gleich dosiertes Fertiggetränk herstellen zu können, sind daher die aus dem Stand der Technik bekannten Getränkekonzentrate zur Herstellung von Fertiggetränken mit einer Konzentration von weniger als 1:20 zusammengesetzt, bezogen auf den Anteil des Getränkekonzentrates an der Gesamtmenge des hergestellten Fertiggetränkes. Aus einem Liter des Getränkekonzentrates können dann ca. 20 l Fer tiggetränk hergestellt werden, wobei bei jedem Pumpvorgang bzw. bei jeder entsprechenden Hubbewegung ca. 10 ml bis 25 ml Getränkekonzentrat aus dem Vorratsbehälter entnommen werden müssen.

Der hohe Zuckeranteil bekannter Getränkekonzentrate führt zu hohen Herstellungskosten. Darüber hinaus trägt der Zuckeranteil im Getränkekonzentrat zu einem hohen Kaloriengehalt des hergestellten Fertiggetränkes bei, was insbesondere von Sportlern als nachteilig angesehen wird.

Aufgabe der vorliegenden Erfindung ist es, ein pumpfähiges Getränkekonzentrat zur Verfügung zu stellen, das mit bekannten handbetätigten Hubspendevorrichtungen der zuvor beschriebenen Art über einen langen Zeitraum in einfacher Weise und mit hoher Genauigkeit dosiert aus einem Vorratsbehälter entnommen werden kann, das sich durch geringe Herstellungskosten und einen geringen Kaloriengehalt auszeichnet und das hochkonzentriert zur Herstellung eines Fertiggetränkes eingesetzt werden kann.

Die vorgenannte Aufgabe wird durch ein Getränkekonzentrat nach Anspruch 1 gelöst. Der Erfindung liegt der Grundgedanke zugrunde, durch Zugabe wenigstens eines organischen Verdickungsmittels zu dem Getränkekonzentrat ein dosiertes Fördern mittels einer manuell betätigbaren Hubspendevorrichtung zu gewährleisten, wobei das Verdickungsmittel in diesem Sinne als Zukkerersatzstoff vorgesehen wird. Die erfindungsgemäß vorgesehene Konzentration des Verdickungsmittels stellt sicher, daß es auch bei mangelnder Dichtheit des Fördersystems zu keinem oder nur zu einem sehr langsamen Absinken des Getränkekonzentrates in der Förderleitung der Hubspendevorrichtung kommen kann. Durch das Verdickungsmittel wird vorzugsweise sichergestellt, daß es zu keinem Absinken des Getränkeskonzentrates in der Förderleitung üblicher Hubspendevorrichtungen über einen langen Zeitraum von vorzugsweise mehr als 10 h kommt. Das Getränkekonzentrat kann dabei einen Süßstoff aufweisen, der wenig oder keine Energie (Kalorien) im Vergleich zu Zucker liefert, um die nötige Süße des Fertiggetränkes einzustellen.

Durch das Verdickungsmittel wird die Viskosität und/oder die Oberflächenspannung des erfindungsgemäßen Getränkekonzentrates derart eingestellt, daß bei der erfindungsgemäß vorgesehenen Konzentration des Verdickungsmittels von 3 g/l bis 6 g/l überhaupt kein Zucker zugesetzt werden muß, um die Pumpfähigkeit des erfindungsgemäßen Getränkekonzentrates sicherzustellen. Dies war überhaus überraschend und nicht zu erwarten. Bei den aus dem Stand der Technik bekannten Getränkekonzentraten wird stets Zucker eingesetzt, um die Pumpfähigkeit mittels manuell betätigbarer Hubspendevorrichtungen und das vollständige Auflösen des Konzentrates in einer zur Herstellung des Fertiggetränkes eingesetzten wässrigen Lösung zu gewährleisten. Im Stand der Technik bestand daher die Auffassung, daß es allein durch hohe Zuckerzugaben zu dem Getränkekonzentrat möglich sei, die geforderte Viskosität und die geforderten Lösungseigenschaften des Getränkekonzentrates einzustellen.

Im übrigen werden weitere physikalische und/oder chemische Eigenschaften des Getränkekonzentrates durch Zugabe des Verdickungsmittels verändert. Bei ausreichender Konzentration des Verdickungsmittels kann auf die Zugabe von Lösungsvermittlern verzichtet werden, die bekannten Getränkekonzentraten zugegeben werden müssen, um Aromen in dem Getränkekonzentrat zu lösen. Bei der Erfindung wirkt das Verdickungsmittel als Emulgator.

Bei einem Fertiggetränk im Sinne der Erfindung handelt es sich um ein fertig zubereitetes zum Verzehr zur Verfügung stehendes trinkbares Getränk, wobei der Volumenanteil des Getränkekonzentrates an dem Gesamtvolumen des Fertiggetränkes mehr als 1:30, insbesondere mehr als 1:50, betragen soll. Eine vergleichsweise geringe Menge des erfindungsgemäßen Getränkekonzentrates reicht somit aus, um eine vergleichsweise große Menge von dem Fertiggetränk herstellen zu können, wobei es die Erfindung zuläßt, das Getränkekonzentrat in Wasser oder in einer wässrigen Lösung, wie in einem Fruchtsaft, zu lösen. Dabei tragen die sehr guten Fördereigenschaften des erfindungsgemäßen Getränkekonzentrates dazu bei, daß auch bei Entnahme von sehr geringen Volumeneinheiten des Getränkekonzentrates aus dem Vorratsbehälter mittels einer Hubspendevorrichtung bei jeder Anmischung ein Fertiggetränk mit einer gleichbleibenden Konzentration bzw. einem gleichbleibenden Geschmack hergestellt werden kann.

Bei Verdickungsmitteln handelt es sich um Quellungsmittel, die Flüssigkeiten, in der Regel Wasser, aufsaugen, dabei aufquellen und schließlich in zähflüssige echte oder kolloide Lösung übergehen. Verdickungsmittel, die durch Wasseraufnahme quellen, werden auch Hydrokolloide genannt. Durch den Einsatz von Verdickungsmitteln ist es möglich, die Viskosität des Getränkekonzentrates zu erhöhen und die Thixotropie-Eigenschaften zu verbessern. Organische Verdickungsmittel sind eßbar, besitzen aber oft keinen Nährwert. Der Einsatz von Verdickungsmitteln als Zuckerersatzstoff in Getränkekonzentraten führt daher zu einem geringeren Kaloriengehalt des Getränkekonzentrates und damit auch des aus dem Getränkekonzentrat hergestellten Fertiggetränkes. Im übrigen sind Verdickungsmittel geschmacksneutral. Durch die gleichzeitige Einsparung an Zucker können durch Einsatz von Verdickungsmitteln Getränkekonzentrate bei deutlich geringeren Herstellungskosten hergestellt werden, als dies bislang möglich gewesen ist. Im übrigen tragen Verdickungsmittel zu einem reduzierten Sauerstoffaustausch des Getränkekonzentrates mit der Umgebung bei, was sich positiv auf die Haltbarkeit des Getränkekonzentrates auswirkt.

Darüber hinaus ist eine nur sehr geringe Menge des Verdickungsmittels notwendig, um eine gewünschte Viskosität des Getränkekonzentrates einzustellen. Bei der Erfindung beträgt die Viskosität des Getränkekonzentrats ca. 600 bis 800 mPa·s, vorzugsweise ca. 700 mPa·s. Die Viskosität wurde gemessen mit einem Brookfield Viskosimeter vom Typ DV-II+. Die angegebenen Werte für die Viskosität beziehen sich auf eine Drehzahl der Spindel von ca. 10 RPM und ein Konzentrat zur Herstellung eines Fertiggetränkes mit einer Konzentration von 1:50, wobei als Verdickungsmittel vorzugsweise Xanthan eingesetzt werden kann.

Um eine geforderte Süße des Fertiggetränkes zu gewährleisten, weist das erfindungsgemäße Getränkekonzentrat vorzugsweise wenigstens einen Süßstoff auf, wobei es sich um einen an sich aus dem Stand der Technik bekannten Ersatzstoff für Zucker handeln kann, der einen geringeren Brennwert als Zucker aufweist. Darüber hinaus kann gegebenenfalls wenigstens ein weiterer Zusatzstoff in dem Getränkekonzentrat enthalten sein.

Durch Zugabe des Verdickungsmittels zu dem Getränkekonzentrat werden die physikalischen und/oder chemischen Eigenschaften des Getränkekonzentrates derart verändert, daß eine gleichbleibende und exakt einstellbare Menge des Getränkekonzentrates bei jedem Pumpvorgang gefördert werden kann, was eine höhere Aufkonzentrierung des Getränkekonzentrates ermöglicht. In diesem Zusammenhang kommt es darauf an, daß eine sehr genaue Dosierung des Getränkekonzentrats möglich ist, was voraussetzt, daß es nur zu einem vernachlässigbaren Absinken des Getränkekonzentrates in der Förderleitung während des Nicht-Betriebes der Hubspendevorrichtung kommt. Erfindungsgemäß kann das Getränkekonzentrat zur Herstellung eines Fertiggetränkes mit einer Konzentration von größer als 1:30, insbesondere von größer als 1:50, zusammengesetzt sein, jeweils bezogen auf das Volumenverhältnis von Getränkekonzentrat zu dem Gesamtvolumen des Fertiggetränkes. In diesem Zusammenhang wird darauf hingewiesen, daß das erfindungsgemäße Getränkekonzentrat zur Herstellung eines Fertiggetränkes mit Wasser entsprechend der vorgenannten Anteile vermischt werden kann. Grundsätzlich läßt die Erfindung auch eine noch stärkere Aufkonzentrierung des Getränkekonzentrates zu, wobei das Getränkekonzentrat zur Herstellung eines Fertiggetränkes mit einer Konzentration von bis zu 1:80 zusammengesetzt sein kann.

Der Austausch von Zucker durch wenigstens ein Verdickungsmittel führt dazu, daß das Getränkekonzentrat eine geringere Dichte aufweist, als die aus dem Stand der Technik bekannten stark zuckerhaltigen Getränkekonzentrate. Das erfindungsgemäße Getränkekonzentrat weist eine Dichte von kleiner als 1,3 kg/l, vorzugsweise von kleiner als 1,2 kg/l, insbesondere von kleiner als 1,1 kg/l auf. Dies trägt zu einem geringeren Gewicht einer das Getränkekonzentrat aufweisenden Vorratseinheit bei.

Erfindungsgemäß konnte überraschenderweise festgestellt werden, daß bereits sehr geringe Konzentrationen des Verdickungsmittels in dem Getränkekonzentrat ausreichen, um eine gewünschte Viskosität des Getränkekonzentrates zu erhalten. Die Konzentration des Verdickungsmittels in dem Getränkekonzentrat beträgt daher 3 g/l bis 6 g/l, insbesondere ca. 4 g/l. Die vorgenannten Angaben beziehen sich jeweils auf einen Liter des Getränkekonzentrates, wobei die gewählten Konzentrationen zum einen die Pumpfähigkeit des Getränkekonzentrates sicherstellen und zum anderen gewährleisten, daß sich das Getränkekonzentrat leicht mit einer wässrigen Lösung oder mit Wasser zu einem Fertiggetränk vermischen läßt.

Das erfindungsgemäße Getränkekonzentrat kann einen Wassergehalt von größer als 70 Vol.-%, vorzugsweise von größer als 80 Vol.-%, insbesondere von größer als 90 Vol.-% aufweisen, jeweils bezogen auf das Gesamtvolumen des Getränkekonzentrates. Dies trägt zu sehr geringen Herstellungskosten des erfindungsgemäßen Getränkekonzentrates bei.

Das erfindungsgemäße Getränkekonzentrat ist im wesentlichen zuckerfrei. Dies ermöglicht die Herstellung von kalorienreduzierten Fertiggetränken. Grundsätzlich kann das Getränkekonzentrat jedoch auch noch geringe Mengen von gelöstem Zucker oder Zuckeraustauschstoffe enthalten. Beispielsweise ist es möglich, den in dem Getränkekonzentrat enthaltenen Süßstoff zumindest zum geringen Teil durch Zucker zu ersetzen, um eine geforderte Süße zu erhalten.

Als Verdickungsmittel können/kann Johannisbrotbaum-Kernmehl und/oder Guarkernmehl und/oder Xanthan und/oder Tarakernmehl und/oder Traganth ausgewählt werden. Guarkernmehl und Xanthan weisen sehr geringe Beschaffungskosten auf und lassen sich leicht ein- und verarbeiten. Die vorgenannten Verdickungsmittel wirken zudem als Stabilisator und verhindern eine Entmischung weiterer Zusatzstoffe, die dem Getränkekonzentrat zugegeben werden können. Darüber hinaus zeichnen sich die vorgenannten Verdickungsmittel durch eine sehr gute Emulsionswirkung aus und sind säurestabil. Xanthan beispielsweise ist säurestabil bei einem pH-Wert von 1 bis 2. Xanthan wirkt als Stabilisator für schwer in Lösung zu bringende Stoffe, wie beispielsweise Öle und Terpene, was das Einbringen von weiteren Lösungsvermittlern in das erfindungsgemäße Getränkekonzentrat nötig machen kann. Zudem tragen die erfindungsgemäß vorgesehenen Konzentrationen bei Einsatz von Xanthan als Sättigungsmittel dazu bei, das Ausfällungen von Mineralien wirkungsvoll verhindert werden können. Im übrigen wird eine Mischung und/oder Phasentrennung, wie sie bei zuckerhaltigen Getränkekonzentraten auftritt, völlig verhindert. Dieser Effekt kann durch Variation der Konzentration des Verdikkungsmittels in dem Getränkekonzentrat weiter optimiert werden.

Als Verdickungsmittel können darüber hinaus Alginsäure und/oder Alginate und/oder Agar-Agar und/oder Carrageen und/oder verarbeitete Eucheuma-Algen und/oder Gummi arabicum und/oder Gellan und/oder Glycerin und/oder Cellulosegummi, insbesondere enzymatisch hydrolisierter Cellulosegummi, und/oder native und/oder modifizierte Stärken ausgewählt werden. Das Verdickungsmittel kann auch ausgewählt werden aus der Gruppe der Pektine, nämlich vorzugsweise amidiertes Pektin. Schließlich kann das Verdikkungsmittel ausgewählt werden aus der Gruppe der Zellulosen, nämlich vorzugsweise mikrokristalline und/oder pulverförmige Zelluose. Beispielsweise kann es sich bei dem Verdickungsmittel um Methylcellulose und/oder Hydroxypropylcellulose und/oder Hydroxypropylmethylcellulose und/oder Ethylmethylcellulose und/oder Carboxymethylcellulose und deren Salze und/oder enzymatisch hydrolysierte Carboxymethylcellulose handeln.

Bei einer bevorzugten Ausführungsform des erfindungsgemäßen Getränkekonzentrates ist vorgesehen, daß das Getränkekonzentrat wenigstens zwei unterschiedliche Verdickungsmittel aufweist und daß, vorzugsweise, das Getränkekonzentrat eine Mischung aus Guarkernmehl und Xanthan, insbesondere zu gleichen Anteilen, aufweist. In bestimmten Fällen reichen schon Konzentrationen von 0,1 ‰ einer Mischung aus Guarkernmehl und Xanthan bezogen auf die Menge des dem Getränkekonzentrat zugegebenen Wassers aus, um den Flüssigkeitsspiegel in der Hubspendevorrichtung über einen ausreichend langen Zeitraum zu stabilisieren bzw. ein Absinken der Steighöhe des Getränkekonzentrates in der Förderleitung zu verhindern. Erfindungsgemäß wurde nämlich festgestellt, daß Getränkekonzentrate, die wenigstens zwei Verdickungsmittel in einer Mischung aufweisen, eine höhere Viskosität aufweisen können als Getränkekonzentrate, die lediglich ein Verdickungsmittel enthalten.

Der weitere Zusatzstoff kann ausgewählt werden aus der Gruppe der Zucker und/oder der Farbstoffe und/oder der Süßungsmittel und/oder der Mineralstoffe und/oder der Konservierungsmittel und/oder der Säuerungsmittel und der Säureregulatoren und/oder der Emulgatoren und/oder der Vitamine und/oder der Antioxidationsmittel und/oder der Geschmacksverstärker und/oder der Aromen und/oder der Proteine. Das erfindungsgemäße Getränkekonzentrat kann grundsätzlich alle im Lebensmittelrecht zugelassenen Zusatzstoffe aufweisen.

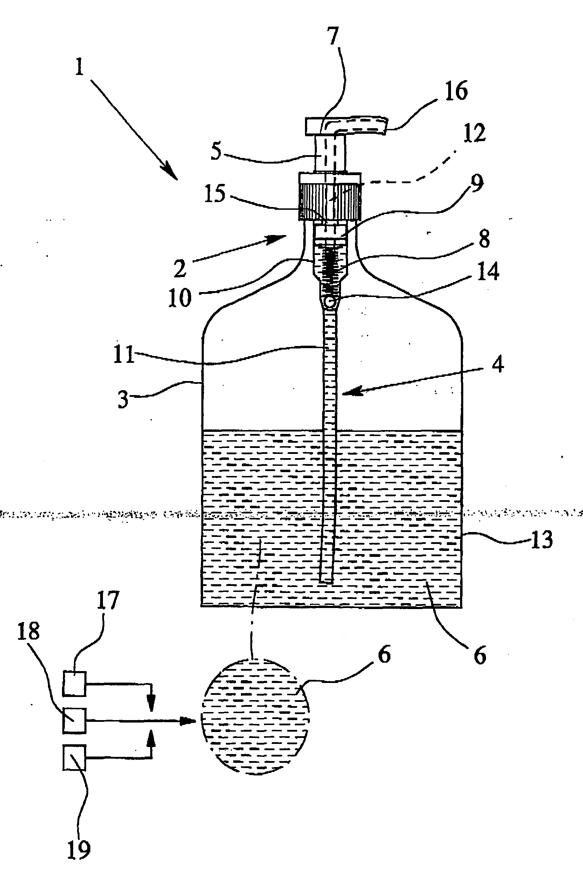

Im einzelnen gibt es eine Vielzahl von Möglichkeiten, das erfindungsgemäße Getränkekonzentrat herzustellen und weiterzubilden, wobei einerseits auf die abhängigen Patentansprüche und andererseits auf die nachfolgende Beschreibung eines bevorzugten Ausführungsbeispiels der Erfindung unter Bezugnahme auf die Zeichnung verwiesen wird.

In der einzigen Figur ist eine erfindungsgemäße Hubspendevorrichtung 1 dargestellt, bei der sich um einen sogenannten Hubdispenser handelt. Die Hubspendevorrichtung 1 weist eine Pumpeinrichtung 2 und einen Vorratsbehälter 3 auf.

Die Pumpeinrichtung 2 weist neben einer Förderleitung 4 wenigstens ein Fördermittel 5 zum Fördern des Getränkekonzentrates 6 aus dem Vorratsbehälter 3 auf, wobei die Förderleitung 4 und das Fördermittel 5 Teile eines Fördersystems sind. Die Pumpeinrichtung 2 ist derart ausgebildet, daß eine auf einen Betätigungsabschnitt 7 des Fördermittels 5 ausgeübte manuelle Druckkraft zu einer Hubbewegung des Fördermittels 5 von einer Ausgangsstellung in eine Endstellung relativ zu der Förderleitung 4 führt. Das Fördermittel 5 wird dabei in der Regel entgegen der Federkraft eines Federmittels 8 in die Endstellung bewegt, so daß es bei Verringerung der auf das Fördermittel 5 ausgeübten Druckkraft des Anwenders durch die Rückstellkräfte des Federmittels 8 zu einer entgegengesetzten Hubbewegung des Fördermittels 5 von der Endstellung in die Ausgangsstellung kommt.

Das Fördermittel 5 wirkt auf einen Kolben 9, der in einer Dosierkammer 10 der Pumpeinrichtung 2 axial verstellbar geführt ist. Die Dosierkammer 10 ist ebenfalls Bestanteil des Fördersystems. Die Dosierkammer 10 ist auf einer Einlaßseite an einen unteren Teil 11 der Förderleitung 4 und auf einer Auslaßseite an einen oberen Teil 12 der Förderleitung 4 angeschlossen. Bei einer Hubbewegung der Fördermittels 5 von der Ausgangsstellung in die Endstellung wird der Kolben 9 in der Dosierkammer 10 in Richtung zu einem Boden 13 des Vorratsbehälters 3 verschoben, wobei durch Ventile 14, 15 des Fördersystems sichergestellt wird, daß der Inhalt der Dosierkammer 10 über den oberen Teil 12 der Förderleitung 4 an einer Austrittsöffnung 16 der Pumpeinrichtung 2 in die Umgebung austritt. Bei der anschließenden Rückstellbewegung des Fördermittels 5 wird der Kolben 9 in die entgegengesetzte Richtung verschoben, wobei durch die Ventile 14, 15 sichergestellt wird, daß es zur Ausbildung eines Unterdrucks in der Dosierkammer 10 und zum Nachströmen des Getränkekonzentrates 6 aus dem Vorratsbehälter 3 über den unteren Teil 11 der Förderleitung 4 in die Dosierkammer 10 kommt. Nach der Befüllung der Dosierkammer 10 liegt die Steighöhe des Getränkekonzentrates 6 in dem unteren Teil 11 der Förderleitung 4 in Höhe des Ventils 14. Dadurch wird sichergestellt, daß es bei jedem anschließenden Pumpvorgang stets zu einer vollständigen Befüllung der Dosierkammer 10 und zur Bereitstellung einer gleichbleibenden Menge des Getränkekonzentrates 6 an der Austrittsöffnung 16 kommt, was erforderlich ist, um Fertiggetränke mit im wesentlichen gleicher Geschmacksintensität herstellen zu können.

Aufgrund mangelnder Dichtheit des Fördersystems kommt es bei Ausbildung eines Unterdruckes in der Dosierkammer 10 zu einem Nachströmen von Umgebungsluft, was in Abhängigkeit von der Standzeit der Hubspendevorrichtung 1 zwischen zwei Pumpvorgängen dazu führen kann, daß die Steighöhe des in dem unteren Teil 11 der Förderleitung 4 anstehenden Getränkekonzentrates 6 nach Beendigung eines Pumpvorgangs absinkt und in den Vorratsbehälter 3 zurückströmt. Um das Absinken des Getränkekonzentrates 6 in der Förderleitung 4 über einen möglichst langen Zeitraum zu verhindern und um eine gleichbleibende Befüllung der Dosierkammer 10 bei jedem Pumpvorgang sicherzustellen, werden die physikalischen und/oder chemischen Eigenschaften des Getränkekonzentrats 6 verändert, wobei das Getränkekonzentrat 6 aus einer wäßrigen vorzugsweise wenigstens einen Süßstoff 17 enthaltenen Lösung 18 und wenigstens einem Verdickungsmittel 19 und gegebenenfalls wenigstens einem weiteren nicht im einzelnen dargestellten Zusatzstoff erhältlich ist. Das Getränkekonzentrat 6 wird mit Wasser zu einem Fertiggetränk vermischt, wobei das Volumenverhältnis von Getränkekonzentrat 6 zu Gesamtvolumen des Fertiggetränkes mehr als 1:30, insbesondere mehr als 1:50, betragen kann. Beträgt das Volumenverhältnis wenigstens 1:20, so bedeutet dies, daß 1 Volumenanteil Getränkekonzentrat mit wenigstens 19 Volumenanteilen Wasser zur Herstellung von 20 Volumenanteilen des Fertiggetränkes vermischt werden muß.

## Patentansprüche

1. Getränkekonzentrat (6) zusammengesetzt zur Herstellung eines Fertiggetränkes durch Vermischen mit Wasser mittels einer manuell betätigbaren Hubspendevorrichtung (1),
- wobei die Hubspendevorrichtung einen Vorratsbehälter (3) für das Getränkekonzentrat (6) und eine Pumpeinrichtung (2) zur dosierten Entnahme einer Volumeneinheit des Getränkekonzentrates (6) aus dem Vorratsbehälter (3) aufweist,
- wobei das Getränkekonzentrat (6) erhältlich ist aus einer wäßrigen Lösung (18) und wenigstens einem organischen Verdickungsmittel (19) und gegebenenfalls wenigstens einem weiteren Zusatzstoff
- wobei die Viskosität des Getränkekonzentrates (6) ca. 600 bis 800 mPa·s beträgt, um die Pumpfähigkeit des Getränkekonzentrates (6) mittels der Hubspendevorrichtung sicherzustellen,
- wobei das Getränkekonzentrat im wesentlichen zuckerfrei ist und die Konzentration des Verdickungsmittels (19) in dem Getränkekonzentrat 3 g/l bis 6 g/l beträgt und
- wobei das Getränkekonzentrat zur Herstellung eines Fertiggetränkes mit einer Konzentration von größer 1:30 bis 1:80 zusammengesetzt ist, jeweils bezogen auf den Volumenanteil des Getränkekonzentrates zu dem Gesamtvolumen des hergestellten Fertiggetränkes.

2. Getränkekonzentrat (6) nach Anspruch 1, **dadurch gekennzeichnet, daß** das Getränkekonzentrat eine Dichte von kleiner als 1,3 kg/l, vorzugsweise von kleiner als 1,2 kg/l, insbesondere von kleiner als 1,1 kg/l aufweist.

3. Getränkekonzentrat (6) nach einem der vorhergehenden Ansprüche 1 oder 2, **dadurch gekennzeichnet, daß** die Konzentration des Verdickungsmittels (19) ca. 4g/l, beträgt, bezogen auf einen Liter des Getränkekonzentrates.

4. Getränkekonzentrat (6) nach einem der vorhergehenden Ansprüche, **dadurch gekennzeichnet, daß** das Getränkekonzentrat einen Wassergehalt von größer als 70 Vol.-%, vorzugsweise von größer als 80 Vol.-%, insbesondere von größer als 90 Vol.-%, aufweist, jeweils bezogen auf das Gesamtvolumen des Getränkekonzentrates.

5. Getränkekonzentrat (6) nach einem der vorhergehenden Ansprüche, **dadurch gekennzeichnet, daß** als Verdickungsmittel (19) Johannisbrotbaum-Kernmehl und/oder Guarkernmehl und/oder Xanthan und/oder Tarakernmehl und/oder Traganth ausgewählt werden/wird.

6. Getränkekonzentrat (6) nach einem der vorhergehenden Ansprüche, **dadurch gekennzeichnet, daß** als Verdickungsmittel (19) Alginsäure und/oder Alginate und/oder Agar-Agar und/oder Carrageen und/oder verarbeitete Eucheuma-Algen und/oder Gummi arabicum und/oder Gellan und/oder Glycerin und/oder Cellulosegummi, insbesondere enzymatisch hydrolisierter Cellulosegummi, und/oder native und/oder modifizierte Stärken ausgewählt werden/wird.

7. Getränkekonzentrat (6) nach einem der vorhergehenden Ansprüche 1 bis 5, **dadurch gekennzeichnet, daß** das Verdickungsmittel (19) ausgewählt wird aus der Gruppe der Pektine und daß, vorzugsweise, als Verdickungsmittel amidiertes Pektin ausgewählt wird.

8. Getränkekonzentrat (6) nach einem der vorhergehenden Ansprüche, **dadurch gekennzeichnet, daß** das Verdickungsmittel (19) ausgewählt wird aus der Gruppe der Cellulosen, daß, vorzugsweise, als Verdickungsmittel eine mikrokristalline und/oder pulverförmige Cellulose ausgewählt wird und daß, weiter vorzugsweise, als Verdikkungsmittel Methylcellulose und/oder Hydroxypropylcellulose und/oder Hydroxypropylmethylcellulose und/oder Ethylmethylcellulose und/oder Carboxymethylcellulose und deren Salze und/oder enzymatisch hydrolysierte Carboxymethylcellulose ausgewählt werden/wird.

9. Getränkekonzentrat (6) nach einem der vorhergehenden Ansprüche 1 bis 4, **dadurch gekennzeichnet, daß** das Getränkekonzentrat (19) wenigstens zwei unterschiedliche Verdickungsmittel aufweist und daß, vorzugsweise, das Getränkekonzentrat eine Mischung aus Guarkernmehl und Xanthan, insbesondere zu gleichen Anteilen, aufweist.

10. Getränkekonzentrat (6) nach einem der vorhergehenden Ansprüche, **dadurch gekennzeichnet, daß** der weitere Zusatzstoff ausgewählt wird aus der Gruppe der Farbstoffe und/oder der Süßungsmittel und/oder der Mineralstoffe und/oder der Konservierungsmittel und/oder der Säuerungsmittel und der Säureregulatoren und/oder der Emulgatoren und/oder der Vitamine und/oder der Antioxidationsmittel und/oder der Geschmacksverstärker und/oder der Aromen und/oder der Proteine.

## Claims

1. A beverage concentrate (6) composed for making a ready-to-drink beverage by mixing with water using a manually operateable lifting dispensing device (1),
- the lifting dispensing device comprising a storage container (3) for the beverage concentrate (6) and a pumping device (2) for the dosed withdrawal of one volume unit of the beverage concentrate (6) from the storage container (3),
- the beverage concentrate (6) being obtainable from an aqueous solution (18) and at least one organic thickening agent (19) and optionally at least one additional additive,
- the viscosity of the beverage concentrate (6) being approximately 600 to 800 mPa·s in order to guarantee the pumpability of the beverage concentrate (6) by means of the lifting dispensing device,
- the beverage concentrate being essentially sugar-free, and the concentration of the thickening agent (19) in the beverage concentrate being 3 g/l to 6 g/l, and
- the beverage concentrate for making a ready-to-drink beverage being composed with a concentration of greater than 1:30 to 1:80, each based on the volume fraction of the beverage concentrate with respect to the total volume of the prepared ready-to-drink beverage.

2. A beverage concentrate (6) according to claim 1, **characterized in that** the beverage concentrate has a density of less than 1.3 kg/l, preferably less than 1.2 kg/l, most preferably less than 1.1 kg/l.

3. A beverage concentrate (6) according to any one of the preceding claims 1 or 2, **characterized in that** the concentration of the thickening agent (19) is approximately 4 g/l, based on one liter of beverage concentrate.

4. A beverage concentrate (6) according to any one of the preceding claims, **characterized in that** the beverage concentrate has a water content of greater than 70% by volume, preferably greater than 80% by volume, most preferably greater than 90% by volume, each based on the total volume of the beverage concentrate.

5. A beverage concentrate (6) according to any one of the preceding claims, **characterized in that** carob bean gum and/or guar gum and/or xanthan gum and/or tara gum and/or gum traganth is selected as thickening agent (19).

6. A beverage concentrate (6) according to any one of the preceding claims, **characterized in that** alginic acid and/or alginates and/or agar-agar and/or carrageen and/or processed eucheuma algae and/or gum arabic and/or gellan gum and/or glycerol and/or cellulose gum, in particular enzymatically hydrolyzed cellulose gum, and/or native and/or modified starches is/are selected as thickening agent (19).

7. A beverage concentrate (6) according to any one of the preceding claims 1 to 5, **characterized in that** the thickening agent (19) is selected from the group of pectins and amidated pectin is preferably selected as thickening agent.

8. A beverage concentrate (6) according to any one of the preceding claims, **characterized in that** the thickening agent (19) is selected from the group of celluloses; a microcrystalline and/or powdered cellulose is preferably selected as thickening agent; and, further preferably, methyl cellulose and/or hydroxypropyl cellulose and/or hydroxypropylmethyl cellulose and/or ethylmethyl cellulose and/or carboxymethyl cellulose and salts thereof and/or enzymatically hydrolyzed carboxymethyl cellulose is/are selected as thickening agent.

9. A beverage concentrate (6) according to any one of the preceding claims 1 to 4, **characterized in that** the beverage concentrate (6) comprises at least two different thickening agents (19), and the beverage concentrate preferably comprises a mixture of guar gum and xanthan gum, most preferably in equal amounts.

10. A beverage concentrate (6) according to any one of the preceding claims, **characterized in that** the additional additive is selected from the group of coloring substances and/or sweeteners and/or mineral substances and/or preservatives and/or acidifying agents and acidity regulators and/or emulsifying agents and/or vitamins and/or antioxidants and/or flavor enhancers and/or flavoring agents and/or proteins.

## Revendications

1. Boisson concentrée (6) composée pour la confection d'une boisson prête à consommer, par mélange avec de l'eau au moyen d'un dispositif distributeur à pompe (1) à actionnement manuel,
- le dispositif distributeur à pompe comportant un réservoir de stockage (3) pour la boisson concentrée (6) et un dispositif de pompage (2) pour le prélèvement dosé d'une unité volumétrique de boisson concentrée (6) à partir du réservoir de stockage (3),
- la boisson concentrée (6) pouvant être obtenue à partir d'une solution aqueuse (18) et d'au moins un épaississant organique (19) et le cas échéant, d'au moins un adjuvant supplémentaire,
- la viscosité de la boisson concentrée (6) étant d'environ 600 à 800 mPa, pour assurer l'aptitude au pompage de la boisson concentrée (6) au moyen du dispositif distributeur à pompe,
- la boisson concentrée étant sensiblement exempte de sucre et la concentration en épaississant (19) dans la boisson concentrée étant de 3g/l à 6g/l et
- la boisson concentrée pour la fabrication d'une boisson prête à consommer étant composée avec une concentration supérieure à de 1 : 30 à 1 : 80, chaque fois rapportée à la part en volume de la boisson concentrée au volume total de la boisson prête à consommer confectionnée.

2. Boisson concentrée (6) selon la revendication 1, **caractérisée en ce que** la boisson concentrée présente une densité inférieure à 1,3 kg/l, de préférence inférieure à 1,2 kg/l, notamment inférieure à 1,1 kg/l.

3. Boisson concentrée (6) selon l'une quelconque des revendications précédentes, **caractérisée en ce que** la concentration de l'épaississant (19) est d'environ 4g/l, rapportée à un litre de boisson concentrée.

4. Boisson concentrée (6) selon l'une quelconque des revendications précédentes, **caractérisée en ce que** la boisson concentrée présente une teneur en eau supérieure à 70 % en volume, de préférence supérieure à 80 % en volume, notamment supérieure à 90 % en volume, chaque fois rapportée au volume total de la boisson concentrée.

5. Boisson concentrée (6) selon l'une quelconque des revendications précédentes, **caractérisée en ce qu'**on choisit en tant qu'épaississant (19) de la farine de caroube et/ou de la farine de graine de guar et/ou du xanthane et/ou de la gomme Tara et/ou de la gomme adragante.

6. Boisson concentrée (6) selon l'une quelconque des revendications précédentes, **caractérisée en ce qu'**on choisit en tant qu'épaississant (19) de l'acide alginique et/ou de l'alginate et/ou de l'agar-agar et/ou du carraghénane et/ou des algues eucheuma transformées et/ou de la gomme arabique et/ou de la gomme gellane et/ou de la glycérine et/ou de la gomme cellulosique, notamment de la gomme cellulosique enzymatiquement hydrolysée et/ou des amidons natifs et/ou modifiés.

7. Boisson concentrée (6) selon l'une quelconque des revendications précédentes 1 à 5, **caractérisée en ce qu'**on choisit l'épaississant (19) parmi le groupe des pectines et **en ce que** de préférence, on choisit en tant qu'épaississant de la pectine amidifiée.

8. Boisson concentrée (6) selon l'une quelconque des revendications précédentes, **caractérisée en ce qu'**on choisit l'épaississant (19) parmi le groupe des celluloses, **en ce que** de préférence on choisit, en tant qu'épaississant une cellulose microcristalline et/ou pulvérulente et **en ce que**, encore de préférence, on choisit par ailleurs en tant qu'épaississant de la méthylcellulose et/ou de l'hydroxypropylcellulose et/ou de l'hydroxypropylméthylcellulose et/ou de l'éthylméthylcellulose et/ou de la carboxyméthylcellulose et leurs sels et/ou de la carboxyméthylcellulose enzymatiquement hydrolysée.

9. Boisson concentrée (6) selon l'une quelconque des revendications précédentes 1 à 4, **caractérisée en ce que** la boisson concentrée (19) comporte au moins deux épaississants différents et **en ce que**, de préférence, la boisson concentrée comporte un mélange de farine de graines de guar et de xanthane, notamment à parts identiques.

10. Boisson concentrée (6) selon l'une quelconque des revendications précédentes, **caractérisée en ce qu'**on choisit l'adjuvant supplémentaire dans le groupe des colorant et/ou des édulcorants et/ou des minéraux et/ou des conservateurs et/ou des acidifiants et ou des régulateurs d'acidité et/ou des émulsifiants et/ou des vitamines et/ou des antioxydants et/ou des exhausteurs de goût et/ou des arômes et/ou des protéines.
